# EUROPÄISCHE PATENTSCHRIFT

(11) **EP 3 402 999 B1**
(45) Veröffentlichungstag und Bekanntmachung des Hinweises auf die Patenterteilung: **09.08.2023**
(21) Anmeldenummer: 17701993.2
(22) Anmeldetag: 09.01.2017
(51) Int. Cl.: F16F 7/10

(54) **SCHWINGUNGSTILGER MIT ELEKTROMAGNETISCHER BREMSE FÜR WINDKRAFTANLAGEN**
VIBRATION ABSORBER HAVING AN ELECTROMAGNETIC BRAKE FOR WIND TURBINES
AMORTISSEUR D'OSCILLATIONS À FREIN ÉLECTROMAGNETIQUE POUR ÉOLIENNES

(30) Priorität: 15.01.2016 EP 16000097
(43) Veröffentlichungstag der Anmeldung: 21.11.2018
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2017/000016
(87) Internationale Veröffentlichungsnummer: WO 2017/121633

(56) Entgegenhaltungen:
- EP-A1- 2 746 483
- EP-A2- 1 008 747
- EP-A2- 2 378 118
- WO-A1-2017/036581
- JP-A- S58 225 241
- JP-A- S62 242 153

## Beschreibung

Die Erfindung betrifft einen Schwingungstilger, welcher im weitesten Sinn auf einer Pendelvorrichtung basiert zur Dämpfung von unerwünschten Schwingungen, welche durch einwirkende Kräfte, insbesondere Windkräfte in hohen schlanken Bauwerken, insbesondere Windkraftanlagen auftreten. Die Erfindung betrifft dabei solche Schwingungstilger, bei denen die Pendelmasse durch eine elektromagnetische Bremse ganz oder teilweise oder temporär angehalten oder abgebremst werden kann je nach Steuerung der Bremse durch entsprechende Stromzuführung oder Stromregulierung. In einer besonders vorteilhaften Ausführungsform ist der Schwingungstilger ein Rollpendel-Tilger.

Es gibt prinzipiell unterschiedliche Einsatzfälle von Bremsen für Schwingungstilger. Dies gilt sowohl für Schwingungstilger in Windkraftanlagen aber auch für Schwingungstilger in anderen schlanken Bauwerken, wie Türme, Masten, Hochhäuser.

In einem ersten Einsatzfall ist der Schwingungstilger stets frei. Der Tilger, z.B. einer Windkraftanlage ist immer in Betrieb und muss für Wartungszwecke von dem Dämpfer eingefangen und befestigt werden..

In einem zweiten Einsatzfall ist der Tilger bei Betrieb der Anlage fixiert. Der Tilger, z. B. einer Windkraftanlage ist im Betrieb der Anlage ausgeschaltet und soll bei Inbetriebnahme der Anlage oder auch bei Stromausfall eingeschaltet werden. Der Tilger wird in diesem Fall ausschließlich dazu verwendet, um die Anlagen gegen die Karmannsch'e Wirbelanregung zu sichern. Dazu wird der Tilger lediglich im Stillstand der Anlage betrieben. Es muss dabei absolut sichergestellt sein, dass der Tilger bei Stillstand der Anlage und/oder bei Stromausfall sicher eingeschaltet wird.

In einem dritten Einsatzfall schwingt der freischwingende Tilger bei Betrieb der Anlage ungebremst. Bei besonders starken Stößen, welche zum Beispiel durch Windböen verursacht werden, wird beispielsweise der Turm einer Windkraftanlage mitsamt Schwingungstilger starken Beschleunigungen ausgesetzt. Durch diese Beschleunigungen schlägt der Tilger am Endanschlag an. Um den Stoß beim Anschlagen des Tilgers zu verringern oder gar zu verhindern, wird der Tilger mit Hilfe einer Bremse "angebremst".

In einem anderen Einsatzfall ist es wünschenswert, die Dämpfung des Tilgers möglichst gering zu halten beispielsweise bei den hier beschriebenen Rollpendel-Tilgern, welche eine rotierende Schwungmasse neben einer Hauptmasse aufweisen und auf einer gekrümmten Laufbahn bewegt werden. Die bei diesen ungedämpften Systemen entstehenden Seitenpeaks sind besonders hoch und können sich deshalb störend auswirken. Deshalb macht es Sinn, den Tilger im Frequenzbereich kleiner oder größer (+/- 10%) als die Turmeigenfrequenz zu bremsen.

Schwingungstilger zur Dämpfung von Schwingungen in Windkraftanlagen, welche mindestens eine Pendelvorrichtung aufweisen, werden z.B. in den Dokumenten EP2378118 A2 und EP2746483 A1 offenbart.

So stellt sich die Aufgabe, für die beschriebenen und anderen Einsatzfälle eine Bremsvorrichtung für Pendeltilger, insbesondere Rollpendel-Tilger zur Verfügung zu stellen, welche ggf. gezielt und gesteuert durch eine entsprechendes Strommanagement die verschiedenen Brems- und Dämpfungsereignisse bedienen kann.

Die Aufgabe wurde durch die Schwingungstilger, wie im Folgenden und in den Ansprüchen beschrieben, gelöst.

Gegenstand der Erfindung ist somit primär ein Schwingungstilger zur Dämpfung von Schwingungen in Windkraftanlagen, welcher mindestens eine Pendelvorrichtung aufweist, umfassend eine Tilgermasse (1), welche
(i) an einer Aufhängekonstruktion (2) frei schwingbar befestigt ist, oder alternativ
(ii) mit einer zumindest in ihrem mittleren Bereich im Wesentlichen konkav oder kreisförmig gekrümmten Laufvorrichtung (507) verbunden ist, auf welcher die Tilgermasse zusammen mit einem angetriebenen rotierenden, rotationssymmetrischen Rotationsmassenbauteil (510) mittels eines rollen- oder räderbetriebenen Fahrwerks (508) hin und her bewegbar ist, wobei der Schwingungstilger erfindungsgemäß eine elektromagnetische Bremseinrichtung aufweist, welche einen Elektromagneten (101, 201, 301,401, 501, 601) umfasst, der an eine federnde Halte- oder Führungsvorrichtung (105, 106, 205, 206, 209, 306, 307, 308, 309, 505, 506, 602) so an dem Schwingungstilger angebracht ist, dass bei Stromfluss im Elektromagneten, der Elektromagnet an die Tilgermasse (1) oder an das mit der Tilgermasse (1) in Verbindung stehende Rotationsmassenbauteil (510) bis zur Berührung herangezogen wird, so dass die Bewegung der Tilgermasse oder des Rotationsmassenbauteils dadurch abgebremst oder gestoppt wird, und der Elektromagnet im stromlosen Zustand durch die federnde Halterung oder allein durch sei Gewicht unter Freigabe der Tilgermasse oder des Rotationsmassenbauteils in seine Ausgangslage zurückkehrt. Hierbei wird in einer bevorzugten Ausführungsform der Erfindung die elektromagnetische Bremse durch ein gesteuertes Strommanagement so betrieben wird, dass sie das Anhalten oder Abbremsen und wieder Anlaufen der Tilgermasse (1, 510), oder eine variable frequenzabhängige Dämpfung der Bewegung der Tilgermassen und somit der unerwünschten Schwingungen bewirkt.

Im ersten Fall (i) ist der erfindungsgemäße Schwingungstilger eine klassischer Pendeltilger, bei dem die Tilgermasse an Seilen oder Stangen frei in der x-y- Ebene schwingen kann.

Im zweiten Fall (ii) ist der erfindungsgemäße Schwingungstilger eine Rolltiger, welcher wie ein Pendel auf einer gekrümmten Lauffläche, beispielsweise einer Schienenkonstruktion, pendelartig in der x- oder der y-Richtung hin und herläuft.

Die elektromagnetische Bremseinrichtung umfasst erfindungsgemäße im Wesentlichen einen Elektromagneten in einer vorzugsweise flachen scheibenförmigen Ausführungsform, welcher an eine federnde Halte- und Führungsvorrichtung 105, 106, 205, 206, 209, 306, 307, 308, 309, 505, 506, 602) an gebracht ist, sowie eine mechanische und / oder elektronische Einrichtung zur Regelung des Betriebes des Elektromagneten in Abhängigkeit von der Bewegung der Tilgermasse und zwar in der Weise, dass mit Hilfe der Regelung der Tilger komplett angehalten (bei maximalen Stromfluss), gebremst oder wieder angelaufen werden lassen kann (bei Stromlosigkeit oder geringen Stromstärken) oder auch für eine variabel einstellbare Dämpfung des Tilgers verwendet werden kann.

Die erfindungsgemäße elektromagnetische Bremseinrichtung ist mit dem Maschinenteil der zu dämpfenden Vorrichtung verbunden und ist so angeordnet, dass der Elektromagnet bei eingeschaltetem Strom in der Lage ist, sich an die pendelnde Tilgermasse oder an eine Fläche (3), die mit der Tilgermasse in Verbindung steht, anzulegen, und bei Unterbrechung des Stroms sich wieder von dieser zu lösen. Dies wird durch die Federkräfte des federnden Elementes (Blattfeder) bewirkt. Die Kontaktfläche kann dabei erfindungsgemäß eine Platte oder eine Verbreiterung der Tilgermasse an einer ihrer Seiten sein, aber auch ein Flansch (606), der direkt oder indirekt mit der Tilgemasse in Verbindung steht. Aus Platzgründen ist es vorteilhaft, die Bremseinrichtung oberhalb oder unterhalb, vorzugsweise unterhalb der Tilgermasse, bzw. des Rotationsmassenbauteils (510) im Falle eines Rollpendel-Tilgers, zu platzieren.

In einer Ausführungsform der Erfindung umfasst die besagte Halte- und Führungsvorrichtung für den Elektromagneten eine Federvorrichtung, welche eine Blattfeder (105, 205, 505) ist, an deren einem Ende der Elektromagnet (101, 201, 301,401, 501) befestigt ist, der bei Stromdurchfluss unter Spannung der Blattfeder an die Tilgemasse (1) oder Schwungmasse (510) gezogen wird, und bei Stromlosigkeit durch die gespeicherte Federkraft in die Ausgangslage zurückgeführt wird.

In einer andern Ausführungsform der Erfindung ist die Halte- und Führungsvorrichtung für den Elektromagneten so ausgeführt und angeordnet, dass der Elektromagnet im stromfreien Betrieb sich alleine durch sein Gewicht von der Tilgermasse löst und in die Ausgangslage zurückkehren kann.

In einer bevorzugten Ausführungsform der Erfindung, tritt der Elektromagnet bei Stromfluss nicht unmittelbar in Kontakt mit der zu bremsenden oder dämpfenden Masse (1, 510), da hier ansonsten Metall auf Metall bewegt werden würde. Aus diesem Grund weist erfindungsgemäß der Elektromagnet einen Bremsbelag in Form einer Bremsplatte, eine Bremsschicht oder eine Bremsringstruktur (102, 202, 302), wobei dieser Belag ganz oder teilweise die zur zu bremsenden/dämpfenden Masse (1, 510) ausgerichteten Fläche des Elektromagneten bedeckt. Um den ggf. auftretenden Verschleiß des Bremsbelages auszugleichen bzw. zu kompensieren kann der Schwingungstilger des Weiteren eine Vorrichtung (103, 203, 303) zur Einstellung der Dicke und der Nachjustierung des Abstandes des besagten Bremsbelages von der Masse (1, 510) aufweisen.

In einer besonderen Ausführungsform ist der Bremsbelag (102, 202, 302) ein Bremsring ist, der die Randbereiche es Elektromagneten abdeckt und durch Justiervorrichtungen (103, 203, 303) in Richtung der zu bremsenden Masse bzw. der Kontaktfläche des Elektromagneten verschoben werden kann.

Der Bremsbelag kann aus für Bremsbeläge üblichen Materialien oder aus einem reibungsbeständigen Elastomer- oder Kunststoffmaterial gefertigt sein. In einer bevorzugten Ausführungsform der Erfindung besteht der Bremsbelag aus Polyurethan-Elastomer, vorzugsweise Polyester-Urethan-Kautschuk, er kann aber auch aus Materialien bestehen, welche üblich für Bremsbeläge sind.

Eine variable frequenzadaptierte Dämpfung oder Bremswirkung durch die verschiedenen beschriebenen Ausführungsformen des erfindungsgemäßen Tilgers geschieht vorzugsweise in dem die Bremse elektrisch/elektronisch angesteuert wird. Dabei wird der Bremsimpuls beispielsweise mit Hilfe eines Schwingungs-Messsystems ausgelöst, welches auf hohe Beschleunigungen anspricht und auf einen variablen Auslöse-Sollwert eingestellt werden kann (0,8m/s² bis 2 m/s², der Wert ist abhängig von der Eigenfrequenz des Turmes; bei einer Eigenfrequenz von 0,25Hz und 0,5m Turm-Amplitude entsteht eine Beschleunigung von 1,23m/s² ). Das Auslösen der Bremse bewirkt eine Reibung zwischen Bremsbelag und Tilgermasse, so dass verhältnismäßig kleine Kräfte über einen längeren Zeitraum als bei einem Endanschlag üblich ist, übertragen werden können.

Grundsätzlich wird das Bremsen mittels der erfindungsgemäßen Schwingungstilger mit einem elektrischen Spulenmagneten erreicht, an welchem bei Anlagenbetrieb eine elektrische Spannung anliegt, sodass der Eisenkern als Magnet in Betrieb ist. Sobald keine Spannung an dem Eisenkern anliegt, verliert er seine magnetische Wirkung, die Bremse schaltet sich ab und der Schwingungstilge, bzw. dessen Pendelmasse wird freigeschaltet.

Aufgrund von Geräusch und Korrosionsschutz ist es zweckmäßig, einen direkten metallischen Kontakt zwischen Elektromagnet und Tilger(masse) zu vermeiden. Deshalb wird erfindungsgemäß ein Bremsbelag (Bremsplatte, 102) auf oder um den Magneten umschlingend angeordnet, vorgeschlagen. Dieser Bremsbelag kann auch im Zentrum eines ringförmigen Magneten angeordnet sein. Damit der Magnet keine Metallberührung bekommt ist die Bremsplatte (102) etwa 0,5 mm bis 1 mm überstehen angeordnet. Um den Verschleiß ausgleichen zu können, ist die Lage der Bremsplatte, mit einer Justiereinrichtung (103), beispielsweise Schrauben einstellbar.

Alternativ oder auch ergänzend ist es möglich den gesamten Elektromagneten mit einem Bremsbelag in 0,5 mm bis 1 mm Dicke zu beschichten. Die reibungsbehaftete Oberfläche des Bremsbelages (102) kann beispielsweise aus einem Kunststoff oder auch aus einem organischen Werkstoff mit einem hohen Reibungskoeffizienten bestehen. Beispiele hierfür sind Polyurethane, insbesondere Polyester-Urethan-Elastomere, wie insbesondere VulkollanⓇ, welches einen für diese Zwecke sehr geringen Verschleiß aufweist, so dass es ausreicht, wenn der Bremsbelag nur 0,5 -1 mm übersteht.

In einer besonderen und vorteilhaften Ausführungsform der Erfindung ist der Schwingungstilger ein Rollpendel-Tilger, bei dem sich die Tilgermasse (1, 510) auf einem Fahrwerk befindet, welches auf einer gekrümmten Laufschiene wie die Bewegung eines klassischen Pendels in einer Ebene hin und her bewegen kann.

Gegenstand der Erfindung ist somit ein Schwingungstilger, bei dem die Pendelvorrichtung mit einer zumindest in ihrem mittleren Bereich im Wesentlichen konkav oder kreisförmig gekrümmten Laufvorrichtung (507) verbunden ist, auf welcher die Tilgermasse (1) zusammen mit dem rotierenden Rotationsmassenbauteil (510) mittels eines rollen- oder räderbetriebenen Fahrwerks (508) hin und her bewegbar ist, wobei das Rotationsmassenbauteil eine Rotationsachse senkrecht zur Ebene der Kreisbahn der Laufvorrichtung aufweist, und die Rotationsrichtung des Rotationsmassenbauteils im Wesentlichen der jeweiligen Richtung des bewegten Fahrwerks (508) entlang der Laufvorrichtung (507) entspricht. Ein solcher typischer Rollpendel-Tilger gemäß der Erfindung wird im Folgenden ausführlicher dargestellt.

Das Rotationsmassenbauteil (510) sollte erfindungsgemäß eine einstellbare variable rotierende Masse (512, 701) aufweisen, die in Abhängigkeit vom Durchmesser 1% - 30% der Tilgemasse (1) entspricht. Das Rotationsmassenbauteil (510) umfasst im Wesentlichen ein angetriebenes Schwungrad (611, 711) mit Antriebsachse oder Welle und ggf. einem Wälzlager und einer oder mehreren Massenscheiben (512, 701) oder Scheibensegmenten hiervon, welche auf die Achse oder Welle des Schwungrades aufgeschoben oder an dieser befestigt werden können und zusammen mit dem Schwungrad rotieren. Das Rotationsmassenbauteil (510) weist eine einstellbare variable rotierende Masse (512, 701) auf, die in Abhängigkeit vom Durchmesser vorzugsweise 1% - 30% der Tilgemasse (1) entspricht. Das Schwungrad (611, 711) weist in einer weitere Ausführungsform eine Vorrichtung auf, die es ermöglicht, den Durchmesser der Massenscheiben oder Massenscheibensegmente des Rotationsmassenbauteils zu verändern, oder den Massenschwerpunkt der rotierenden Scheiben oder Scheibensegmente radial nach außen oder innen zu verändern. Ferner können auch Massenscheiben mit unterschiedlichem Durchmesser eingesetzt werden. Hierdurch ist eine variable Frequenzanpassung des Tilgers und Dämpfung durch den Tilger möglich.

In einer weiteren Variante des beschriebenen Roll-Pendeltilgers weist dieser einen zusätzlichen Wirbelstromdämpfer auf, der im Rotationsmassenbauteil (510) untergebracht und wirksam ist, und primär auf die Schwungmasse Einfluss nimmt. Der Wirbelstromdämpfer umfasst dabei eine aus Permanentmagneten bestehenden Magnetanordnung (703) und eine elektrisch leitende, nicht magnetisierbare Metallscheibe (702) (Leiterscheibe). Die Magnetanordnung (703) kann dabei im Umfang des Schwungrades (711, 611) angeordnet sein, wobei die metallische Leiterscheibe (702) zwischen Magnetanordnung und Schwungmasse (512, 701) fest angebracht ist. Alternativ ist das Schwungrad (711, 611) mit der mitrotierenden metallischen Leiterscheibe (702) versehen oder ist selbst die Leiterscheibe, und die gegenüberliegende Magnetanordnung (703) ist auf einer nicht-mitrotierenden Platte angeordnet, welche sich zwischen Schwungrad (711, 611) und Schwungmasse (512, 701) befindet.

Die Laufvorrichtung (507) weist eine, vorzugsweise zwei parallel geführte Laufschienen (beispielsweise zwei T-Schienen) auf, auf denen das Fahrwerk (508) mit der Tilger-Hauptmasse (1) und der rotierenden Schwungmasse (510) auf mindestens zwei Laufrädern oder Laufrollen auf der Laufvorrichtung hin und her bewegt werden kann. In einer bevorzugten Ausführungsform ist mindestens eine Laufschiene und / oder mindestens ein Laufrad der Laufvorrichtung (507) mit einer die Reibkräfte steigernde Beschichtung, Auflage oder Oberflächenstruktur für die Laufflächen ausgestattet. Zur verbesserten Haftung und erhöhten Reibung weisen die Antriebs- bzw. Laufräder zumindest teilweise eine reibungserhöhende Laufflächenstruktur auf. In einer besonderen Ausführungsform umfasst die Auflage einen Zahnriemen bzw. eine Zahnstruktur. Zur weiteren Verbesserung kann in das Antriebssystem des Rotationsmassenbauteils (510) auch eine Rutschkupplung (700) integriert sein.

Der beschriebene, mit einer erfindungsgemäßen Bremsvorrichtung ausgestatte Roll-Pendeltilger ist hervorragend geeignet, Schwingungen unter 5 Hz, insbesondere < 1 Hz, insbesondere < 0.5 Hz, vorzugsweise zwischen 0.1 und 0.25 zu dämpfen. Für die entsprechenden Frequenzänderungen sind dabei nur kleine Massen notwendig, die etwa 1/20 bis 1/4, vorzugsweise etwa 1/10 der schwingenden Hauptmasse betragen, was ein deutlicher Vorteil gegenüber vergleichbare Schwingungstilger des Standes der Technik ist. So kann die Frequenz einer schwingende Hauptmasse von 250 kg mit einer Rotationsmasse von rund 65 kg mit einem Durchmesser von 0.25m um 20 - 30% verändert werden bei einer Länge der Laufvorrichtung von 2.5 m - 3.5 m. Bei einem Durchmesser der Rotationsmasse von 0.5 m ist für den gleichen Effekt lediglich eine Rotationsmasse von rund 15 kg notwendig, und bei einem Durchmesser von 0.75 m eine Rotationsmasse von etwa 7 kg. Weiter kann die Frequenz einer schwingende Hauptmasse von 500 kg mit einer Rotationsmasse von rund 130 kg mit einem Durchmesser von 0.25m um 20 - 30% verändert werden bei einer Länge der Laufvorrichtung von 2.5 m - 3.5 m. Bei einem Durchmesser der Rotationsmasse von 0.5 m ist für den gleichen Effekt lediglich eine Rotationsmasse von rund 30 kg notwendig, und bei einem Durchmesser von 0.75 m eine Rotationsmasse von etwa 15 kg. Weiter kann die Frequenz einer schwingende Hauptmasse von 1000 kg mit einer Rotationsmasse von rund 250 kg mit einem Durchmesser von 0.25m um 20 - 30% verändert werden bei einer Länge der Laufvorrichtung von 2.5 m - 3.5 m. Bei einem Durchmesser der Rotationsmasse von 0.5 m ist für den gleichen Effekt lediglich eine Rotationsmasse von rund 65 kg notwendig, und bei einem Durchmesser von 0.75 m eine Rotationsmasse von etwa 30 kg.

Durch Einsatz eines solchen Tilgers ist es erfindungsgemäß möglich, eine Frequenzänderung der Eigenschwingung um bis zu 30%, vorzugsweise bis 20%, insbesondere bis 10 oder 15% vorzunehmen, je nach gewählter Rotationsmasse bzw. Trägheitsmoment sowie anderen konstruktiven Eigenschaften dieser rotierenden Masse, welche etwa 1% bis 30% der Hauptmasse entspricht.

Generell kann die Frequenz unter anderem durch folgende Maßnahmen alleine am Schwungrad verändert werden: (i) Größe der Masse , (ii) Position der Masse bzw. des Massenschwerpunktes auf der Achse: so verändert sich das Massenträgheitsmoment, wenn die Masse entlang der Achse axial nach außen oder nach innen geschoben wird, (iii) Position der Masse bzw. des Massenschwerpunktes in Bezug auf den Durchmesser des rotierenden Bauteils und (iv) Länge und Krümmung der Laufvorrichtung. So kann in einer besonderen Ausführungsform der Erfindung der Massenschwerpunkt mittels einer Verschiebeeinrichtung radial nach innen oder außen verschoben werden, was ebenfalls zu einer Änderung des Massenträgheitsmomentes führt, wodurch wiederum Einfluss auf die Eigenfrequenz genommen werden kann. In einer einfacheren Variante können einfach im Durchmesser größere oder kleinere Massenscheiben (bei gleicher Gesamt-Rotationsmasse) auf das Schwungrad montiert werden.

Die erfindungsgemäßen Tilger, insbesondere die besonders vorteilhaften Rollpendel-Tilger zeigen hervorragende dämpfende Eigenschaften in Türmen und Gondeln von Windkraftanlagen, aber auch bei anderen Schwingungen ausgesetzten hohen und schlanken Bauwerken in einem variabel einstellbaren Frequenzbereich, der auf die Eigenfrequenzen des zu dämpfenden Schwingungssystem abgestimmt ist, bei Windkraftanlagen in einem Bereich vorzugsweise zwischen 1 und 20 Hz. Wie bereits erwähnt, ist es durch die Bremsvorrichtung auch möglich, eine Feinabstimmung der Frequenz des Tilgers durchzuführen, wobei auch Werte gewählt werden können, die leicht ober- oder unterhalb der Eigenfrequenz der Anlage liegen, um somit bestimmten Schwingungsproblemen zu begegnen.

Die erfindungsgemäßen Schwingungstilger mit den beschriebenen elektromagnetischen Bremsen können in den verschiedensten Ausgestaltungen und Anordnungen am und im Tilger vorliegen. Beispiele sind in den Fig.. 1 - 13 gezeigt, welche im Folgenden näher beschrieben werden.

Dabei bedeuten die verwendeten Bezugsgrößen folgendes:

### Schwingungstilger:

- 1: Tilgermasse
- 2: Aufhängekonstruktion
- 3: Platte oder Flansch als Kontaktfläche für elektromagnetische Bremse
- 506: Befestigungskonstruktion
- 507: Laufschiene / Laufvorrichtung
- 508: Antriebs-Rollen / Fahrvorrichtung
- 509: Feststellbremse für Schwungmasse
- 510: Rotationsmassenbauteil umfassend ein Schwungrad und eine Schwungmasse
- 511: Schwungrad
- -512-: Schwungmasse
- 606: Platte / Flansch als Kontaktfläche für elektromagnetische Bremse
- 610: Anschlagpuffer Laufschiene
- 700: Rutschkupplung umfassend Kupplungsscheibe 706 und Druckfederteil (709, 710)
- 701: Schwungmasse/Rotationsmasse
- 702: Wirbelstrom-Leiterplatte
- 703: Wirbelstrom-Magnetelemente/ Platte mit Magentelementen
- 706: Kupplungsscheibe / Belegascheibe
- 707: Antriebswelle
- 708: Gleitlager
- 709: Druckfeder
- 710: Druckfeder-Vorspannscheibe
- 711: Schwungrad (mit oder ohne Speichen)
- 713: Antriebsrolle mit Verzahnung
- 712: Wälzlager - Antriebsrolle

### Elektromagnetische Bremse:

- 4: Magnetbremse offen (mit Luftspalt)
- 5: Magnetbremse geschlossen
- 100: Bremseinrichtung (komplett)
- 101: Elektromagnet
- 102: Bremsplatte
- 103: Justierschrauben für Bremsplatte
- 104: Überstand der Bremsplatte über Magneten
- 105: Blattfeder
- 106: Befestigungskonstruktion
- 200: Bremseinrichtung (komplett)
- 201: Elektromagnet
- 202: Bremsplatte
- 203: Justierschrauben für Bremsplatte
- 205: Blattfeder
- 205a: vorgezogene Blattfeder
- 206: Befestigungskonstruktion
- 207: Magnetführung am Außendurchmesser
- 208: Magnetführung durch Nocken die in den Bremsbelag hineinragen.
- 209: Magnethalterung
- 301: Elektromagnet
- 302: Bremsplatte / Bremsbelag
- 303: Justierschrauben für Bremsplatte / Bremsbelag
- 304: Überstand der Bremsplatte über Magneten
- 306: Befestigungskonstruktion
- 307: Magnetführung am Außendurchmesser
- 308: Magnetführung durch Nocken die in den Bremsbelag hineinragen
- 309: Magnethalterung
- 310: Magnetauflage
- 311: Bremsbelag Abstützplatte
- 412: Magnetführung durch Nocken die in den Bremsbelag hineinragen
- 413: untere Halteplatte
- 501: Elektromagnet
- 502: Bremsplatte
- 503: Justierschrauben für Bremsplatte
- 504: Überstand der Bremsplatte über Magneten
- 505: Blattfeder
- 514: Magnet-Spalt ungebremst
- 515: Magnet-Spalt gebremst
- 601: Elektromagnet
- 602: Blattfeder
- 603: Versteifungselement
- 604: Dämmelement
- 605: Befestigung für Bremseinrichtung an der Tilgerkonstruktion

### Detailliertere Beschreibung der Erfindung unter Hinzuziehung der Abbildungen:

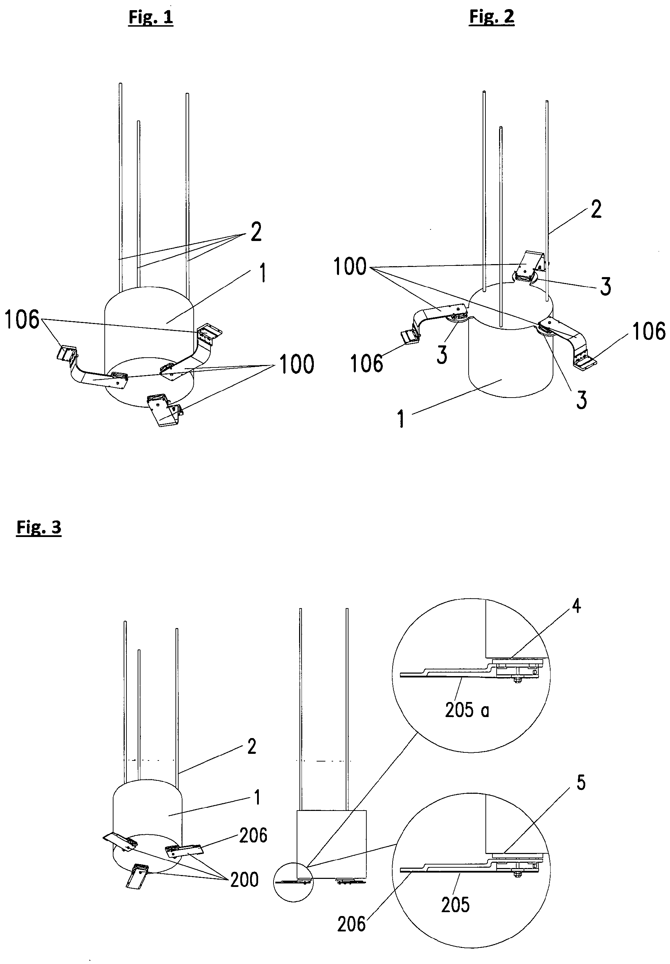

Fig. 1 bis 3 zeigen einen Schwingungstilger für einen Turm, insbesondere einer Windkraftanlage, welcher beispielsweise mit drei elektromagnetischen Bremseinrichtungen (100, 200) ausgestattet ist. Diese Bremseinrichtungen bestehen im Wesentlichen aus einer Haltevorrichtung mit einer Blattfeder, an deren einem Ende ein stromregulierbarer Elektromagnet angebracht ist. Die Anbringung ist dabei von der Art, dass bei Stromfluss, der Elektromagnet an die metallische Außenwand der Tilgermasse (1) oder einer metallischen Kontaktfläche (3) gezogen wird, und dabei die an ihm befestigte Blattfeder (105, 2015) spannt. Durch das Anlegen des Elektromagneten an die Tilgermasse oder eine Kontaktfläche, die mit der Tilgermasse in Verbindung steht, wird die Pendelbewegung der Tilgermasse falls gewünscht, bis zum Stillstand gebremst. Durch ein variierbares im Voraus berechnetes Strommanagement (Variation der Magnetstärke durch Veränderung des Stromflusses) kann gezielt auf die Schwingung des Pendels und damit auf Dämpfung des durch den Tilger zu dämpfenden Systems Einfluss genommen werden. Bei Abschalten des Stroms und Unterbrechung der Magnetwirkung, wird die Bremseinrichtung durch die vorhandene Federspannung wieder in die Ausgangslage geführt.

Prinzipiell ist es möglich, an einem Schwingungstilger mehrere derartiger elektromagnetischer Bremsen zu installieren und anzuordnen, wie dies gezeigt ist Die Anordnung erfolgt dabei vorzugsweise so, dass alle denkbaren Bewegungsrichtungen der Pendelvorrichtung ermöglicht werden. Bei einem klassischen aufgehängten Pendel mit Masse am Pendelende können die elektromagnetischen Bremseinrichtungen unterhalb der Pendelmasse oder oberhalb davon angeordnet sein, abhängig vom zur Verfügung stehenden Platz. Diese können wie in Fig. 1 und 3 gezeigt, unterhalb der Schwungmasse angeordnet werden oder wie in Fig. 2 dargestellt, auch oberhalb der Schwungmasse angeordnet werden. Diese können direkt auf die Tilgermasse wirken oder auch gemäß Fig. 2 auf Elemente wirken, welche außerhalb der Masse angeordnet sind.

Durch die Anzahl der Bremseinrichtungen (üblicherweise 1 - 3 oder 4 )und ihre Verteilung im Bereich der Tilgermasse kann ebenfalls Einfluss auf die Brems- und Dämpfungswirkung genommen werden. Die Tilgermasse ist erfindungsgemäß Stahl oder Stahllegierung. Falls die Tilgermasse nicht aus magnetisierbarem Material besteht, müssen an dieses entsprechende Kontaktflächen oder Flansche aus Stahl oder Stahllegierung angebracht sein, die mit dem Elektromagneten in Kontakt treten können.

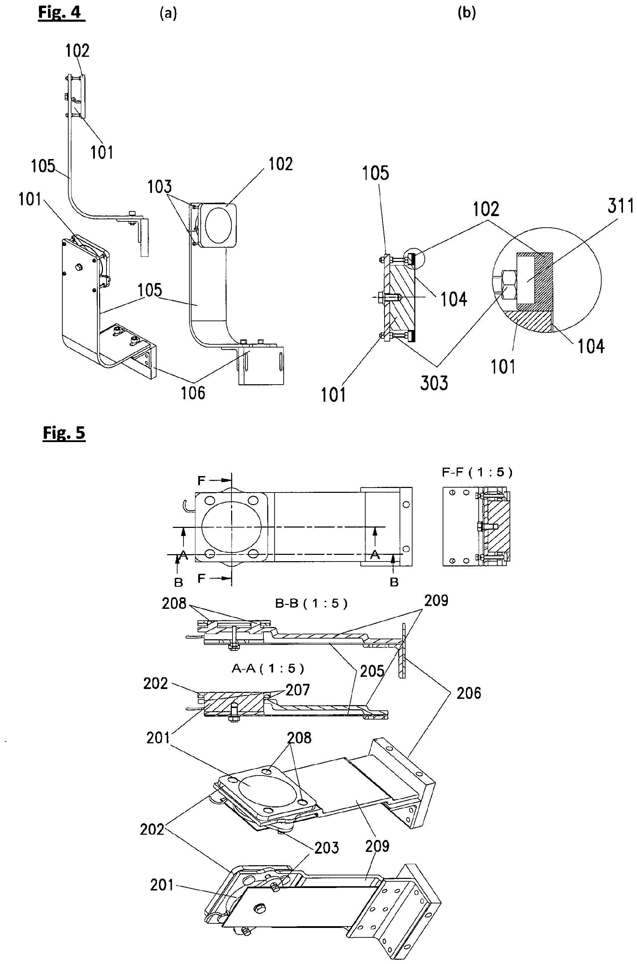

Fig. 4 bis 7 zeigen diverse Ausführungsformen, Ausgestaltungen und Anordnungen der erfindungsgemäßen Bremseinrichtung unter Verwendung beispielsweise von Verstärkungsbügeln und Bremsbelägen, die im Detail weiter wie folgt beschrieben werden.

*Variante 1:* Diese Variante stellt die einfachste Ausführung dar. Das Kernstück, der Elektromagnet (101), ist mit einer Blattfeder befestigt. Die Blattfeder (105) wird in ihrer Befestigungskonstruktion (106) so eingestellt, dass der Magnet einen maximalen Luftspalt (4) von beispielsweise 5 mm erreicht. Die Verbiegung der relativ langen Blattfeder ermöglicht die Bewegung von ca. 5 mm mit kleiner Anziehungskraft. Statt der langen Blattfeder ist auch der Einsatz kürzerer Federn, welche in einer Zickzackform ausgeführt sind, so dass die Biegelänge entsprechend länger wird. Da die Blattfeder auch Querkräfte aufnehmen muss, ist diese relativ breit. Allgemein können erfindungsgemäß Blattfedern mit der Dicke von ca. 5 mm und der Breite von etwa 100-200 mm mit einer Länge von etwa 300-500 mm verwendet werden.

*Variante 2:* Bei dieser Variante kann eine verhältnismäßig dünne Blattfeder von 2 mm bis 4 mm, vorzugsweise 3 mm Dicke verwendet werden. Die Kraftübertragung erfolgt durch die Magnethalterung (209). Diese ist an der Befestigung Konstruktion (206) angebracht und umschlingt den Magneten (201) mit einer Gleitführung (207). Alternativ zu der beschriebenen Gleitführung kann der Magnet über die am Magnet Formschlüssig angebrachten Bremsplatte (202) mit den Nocken (208) geführt werden. Den Nocken (208) sind an der Magnethalterung (209) befestigt. Damit braucht die Blattfeder keine radialen Lasten übertragen.

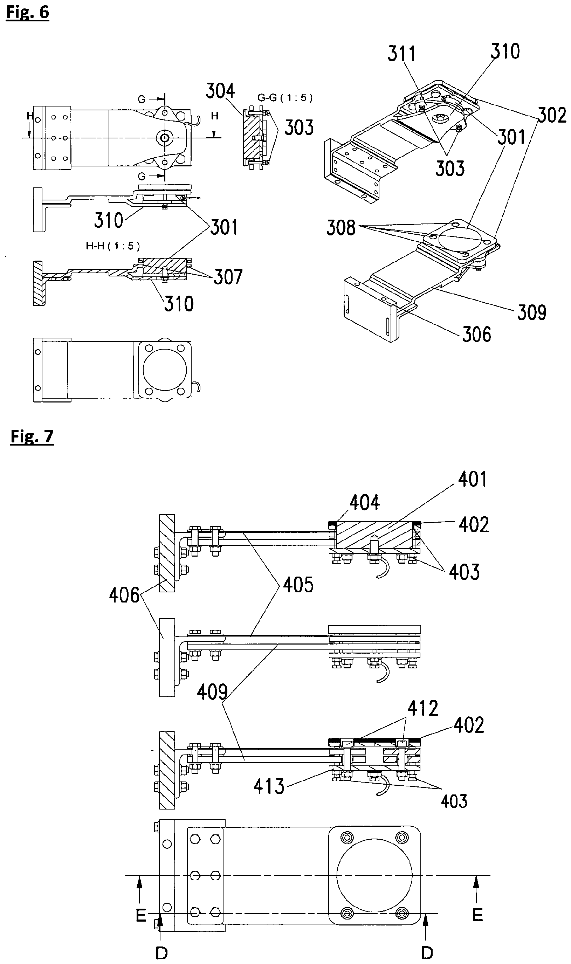

*Variante 3:* Bei dieser Variante (Abb. 6) wird auf eine Blattfeder verzichtet. Der Elektromagnet arbeitet nach oben und fällt durch Schwerkraft nach dem Lösen des Magneten (durch Stromabschaltung oder Stromverminderung) nach unten auf die Magnetauflage (310). Zum Einstellen und Abstützen der Bremsplatte (302) dient die Bremsbelag-Abstützplatte (311).

*Variante 4:* Ähnlich wie bei Variante 2 wird hier nur eine dünne Blattfeder, 405 benötigt, welche lediglich die Führung des Magneten übernimmt (Abb. 7)

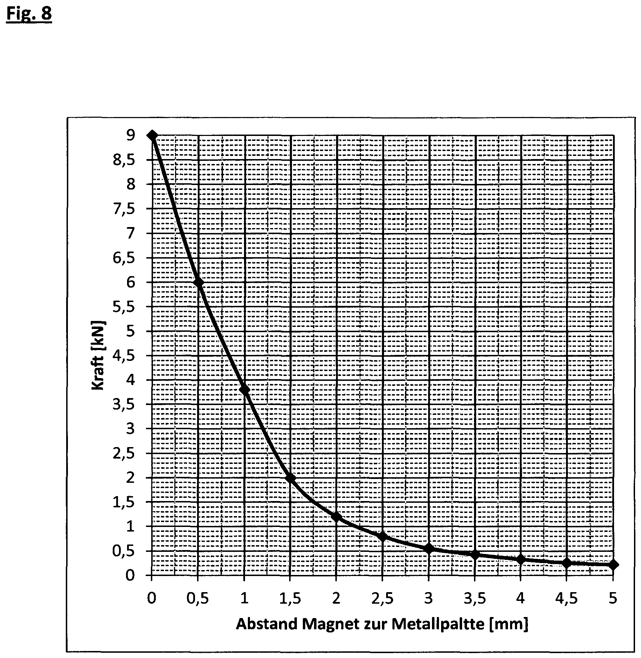

Fig. 8 zeigt ein typisches Diagramm zwischen Magnetkraft und Abstand des Magneten zur Metallplatte (Tilgermasse). Der Elektromagnet hat erfindungsgemäß in der Regel einen Abstand von ca. 3 - 10 mm, vorzugsweise etwa 5 mm zum Tilger, bzw. zur entsprechenden bewegten Tilgermasse (1, 510), die abgebremst werden soll. Dieser Abstand kann beispielsweise aufgrund weicher Blattfedern mit relativ kleiner Kraft zum schwingenden Element eingehalten werden. Dabei ist zu beachten, dass mit kleiner werdendem Abstand die Magnetkraft überproportionalansteigt, wie dies in Fig. 8 gezeigt ist. Bei dem gezeigten Beispiel beträgt die Magnetkraft bei einem Abstand des Elektromagneten von 5 mm noch mehr als 200 Newton. Das reicht aus, um den Elektromagneten gegen die entgegen gerichtete Federkraft der Blattfeder in Richtung der schwingenden Masse zu bewegen. Für besondere Einsatzfelder kann die Anziehungskraft verstärkt werden, so dass größere Abstände und-oder steifere Blattfedern möglich sind. Da der Magnet augenblicklich angezogen wird, wird nur ein sehr kurzer Kraftimpuls benötigt. Dazu kann es zweckmäßig sein, kurzzeitig eine höhere elektrische Spannung zur Verfügung zu stellen. Diese kann beim Zuschalten des Magneten über einen kurzen Spannungsstoß (zum Beispiel Kondensatorentladung) erfolgen. Da die höhere Spannung und damit auch höhere Erwärmung nur über einen kurzen Zeitraum stattfindet, muss der Magnet aufgrund der geringen thermischen Energie nicht für die hohen Spannungen ausgelegt sein.

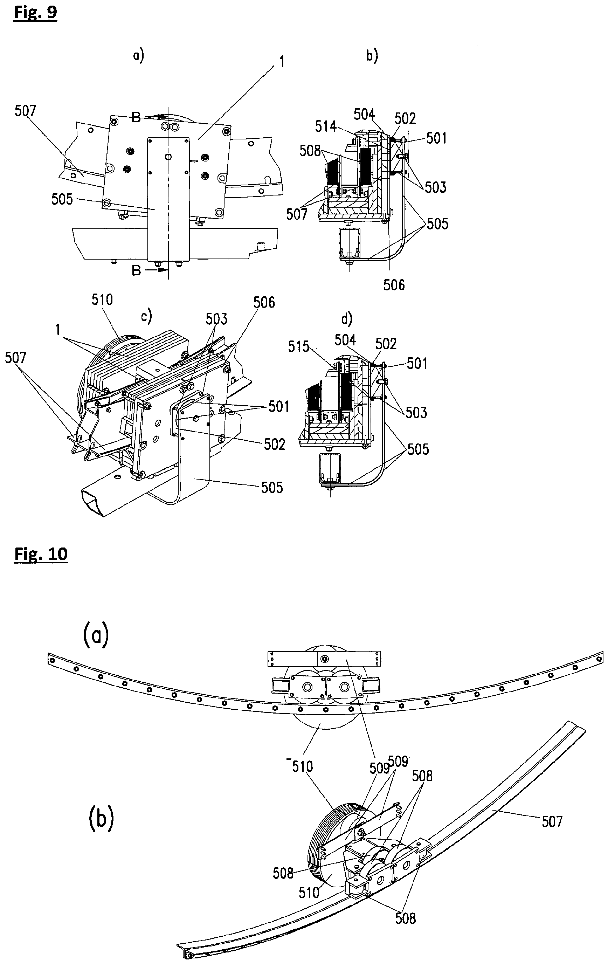

Fig. 9 - 13 zeigen einen erfindungsgemäßen Schwingungstilger, der als Roll-Pendeltilger, der sich auf eine gekrümmten Laufbahn bewegt, und mit einer rotierenden Schwungmasse ausgestattet ist, die sich zusammen mit der Laufvorrichtung entlang der gekrümmten Laufbahn bewegt.

Der Schwingungstilger wird hierbei gebildet von einer an den Enden nach oben gekrümmten Lauffläche (507) mit zwei parallel verlaufenden Laufschienen. Auf dieser Laufvorrichtung wird entsprechend der Schwingungen der Anlage ein Fahrwerk (508) mit Rädern oder Rollen hin und her bewegt. Das Fahrwerk mit den Rollen oder Rädern umfasst auch die Tilgermasse (1) sowie ein rotierendes Schwungrad (511, 711) mit einer Schwungmasse (512, 701), die ggf. variiert werden kann. Schwungrad und Schwungmasse bilden die Kernkomponenten des Rotationsmassenbauteils (514, 701). Tilgermasse und Schwungmasse bewegen sich mit dem Fahrwerk. Die Konstruktion ist mit einer oder mehreren elektromagnetische Bremsen, wie beschrieben, ausgestattet, welche die Bewegungen der Tilgerhauptmasse und/oder der Schwungmasse abbremsen oder dämpfen können.

Die Laufvorrichtung des erfindungsgemäßen Tilgers besitzt, wie gesagt eine zumindest im mittleren Bereich eine gekrümmte Form, die weitgehend der Kreisform entspricht. Die Laufvorrichtung kann insbesondere in ihren beiden Endabschnitten auch weitgehend linear sein oder eine Hyperbelform aufweisen. Das Laufprofil kann auch kreisförmig sein mit am Ende anderen Radius als im Mittelbereich. Die Länge der Laufvorrichtung, welche das Fahrwerk mit der Tilger-Hauptmasse und der Rotationsmasse durch Abrollen zurücklegen kann, kann den Platznotwendigkeiten in der Anlage angepasst sein. Für Windkraftanlagen hat sich gezeigt, dass eine Länge von 2 m bis etwa 5 m am geeignetsten ist, vorzugsweise zwischen 3 bis 4 m. Die beiden anderen Dimensionen können wesentlich kleiner ausfallen. Der Durchmesser der Rotationsmasse für einen Tilger dieser Größe kann etwa zwischen 0.25 m und 0.75 m gewählt werden, obwohl auch Durchmesser > 0.75m einsetzbar sind. Ein Tilger mit solchen Ausmaßen kann im Prinzip nicht nur im Turm einer Windkraftanlage sondern auch in der Gondel innen oder außen angebracht werden.

Generell ist es erfindungsgemäß möglich, dass das Fahrwerk mit mehreren Antriebsrädern und damit auch mehreren rotierenden Schwungmassen, insbesondere zwei Schwungmassen bzw. Rotationsmassenbauteilen ausgerüstet wird. Die Größe bzw. der Durchmesser des auf der Laufschiene oder dem Laufrohr sich drehenden Antriebsrades bestimmt mit die Drehzahl des Rades und damit auch die Drehzahl des mit ihm verbundenen Schwungrades und der Rotationsmasse. Auch mit einer veränderbaren Drehzahl kann Einfluss auf die Frequenzeinstellung des Tilgers genommen werden. So ist es auch möglich die Drehzahl des Schwungrades durch Einbau eines Getriebes um ein Vielfaches gegenüber dem Antriebsrad zu erhöhen.. Es ist ferner auch möglich, das Antriebsrad und damit das Schwungrad des Rotationsmassenbauteils oder das Schwungrad selbst aktiv durch einen Motor anzutreiben.

Das Rotationsmassenbauteil (510) umfasst erfindungsgemäß ein Schwungrad aus Metall, Kunststoff, Karbonfaser oder einem Verbundwerkstoff. Vorzugsweise besteht es aus Stahl oder Aluminium und kann in einer leichten Bauweise auch in einer mit Speichen versehenen Variante vorliegen. Das Schwungrad weist eine zentrale Welle oder Achse, die als Wälzlager ausgestaltet sein kann, auf, mit der es auf der einen Seite über ein Antriebsrad mit dem Fahrwerk verbunden ist. Auf der anderen Seite befinden sich die Rotationsmasse / Schwungmasse (512, 701), die ebenso wie das Schwungrad (511, 711) rotiert. Die Rotationsmasse kann durch eine oder mehrere Scheiben von kleinerem oder größerem Durchmesser oder durch Massenelemente gebildet werden, welche entlang des Umfanges des Schwungrades oder eines kleineren oder größeren Radius fest oder radial nach außen oder innen verschiebbar angeordnet sind. Hierdurch kann Einfluss auf die Eigenfrequenz des Schwingungssystems genommen werden.

Die Achse oder Welle des Schwungrades und damit der Rotationsmasse ist so ausgerichtet, dass die Ebene des Rades weitgehend parallel zu den anderen Laufrädern auf den Schienen bzw. dem Laufrohr angeordnet ist, so dass im optimalen Fall die Drehrichtung der Rotationsmasse der Richtung der Laufvorrichtung und damit der Richtung des Fahrwerks entspricht. Durch Variation der Massenscheiben oder der Massenscheibensegmente kann die Frequenz und damit die Dämpfung beeinflusst werden.

Eine Ausführungsform eines solchen Rollpendel-Tilgers mit entsprechender Bremsvorrichtung wird in Fig. 9 und 10 dargestellt. Diese weist eine Laufvorrichtung aus zwei parallel geführten Laufschienen (hier als doppelte T-Schiene ausgeführt), und ein Fahrwerk mit zwei hintereinander angeordneten freilaufenden Laufrädern, die auf der ersten Laufschiene laufen, und ein Antriebsrad auf, welches auf der zweiten Laufschiene gegenüber den beiden freien Laufrädern angeordnet ist und mit einem nach außenweisenden Schwungrad (511, 711) mit mindestens einer Massenscheibe (512) verbunden ist. Das Rotationsmassenbauteil (510) ist auf dem Fahrwerk angebracht, bzw. ein Teil desselben.

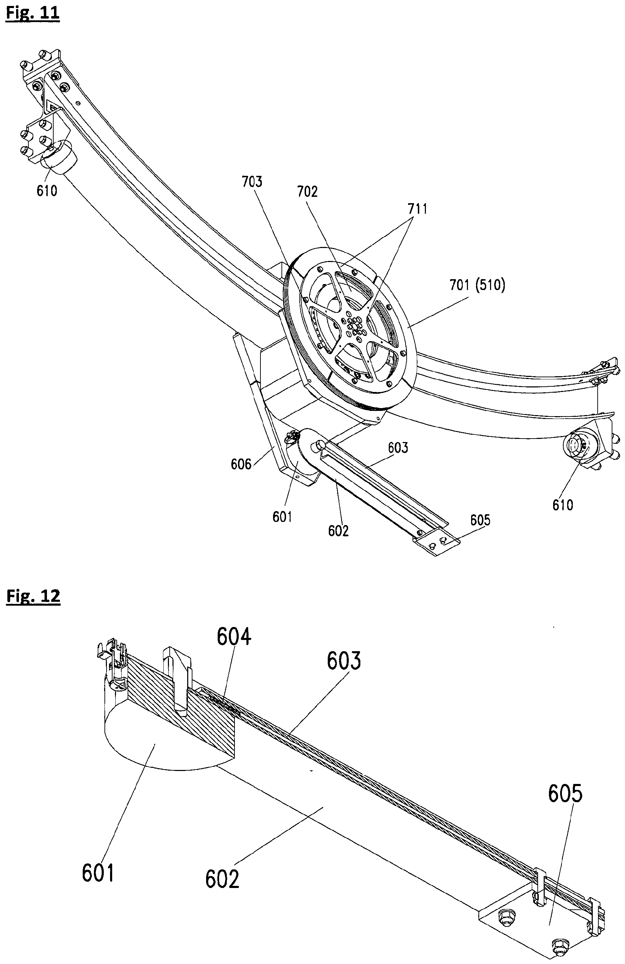

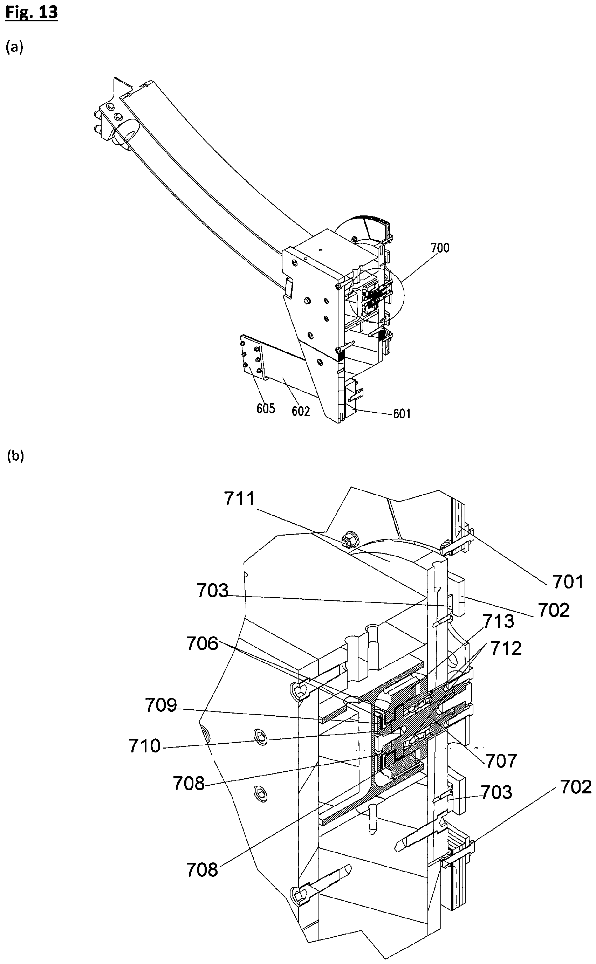

Fig. 11 - 13 zeigen weitere vorteilhafte Ausführungsformen eines erfindungsgemäßen Roll-Pendeltilgers mit einer erfindungsgemäßen Bremseinrichtung , wie beschrieben, sehr platzsparend unterhalb des Fahrwerkes und unterhalb der Laufschienen. Das Rotationsmassenbauteil (510, 701) weist dabei eine zusätzliche Dämpfungseinrichtung in Form eine Wirbelstromdämpfers (702, 703), wie oben beschrieben, auf. (Fig. 11, Fig. 13)

Damit die Bremse im nicht gebremstem Zustand nicht ins flattern geraten kann, und auch nicht die relativ sensible Blattfeder (602) mit der Bremsbefestigung durch Fehlbehandlung verbogen werden kann, kann diese mit einer Versteifungsleiste (603) abgestützt werden. Um ein Aufschwingen der Blattfeder (602) zu verhindern, ist zwischen Blattfeder und Versteifungsleiste (603) ein dämpfendes Gummielement (604) platziert. Die Blattfeder drückt mit einer leichten Vorspannung gegen das Gummielement (604), so dass dieses im nicht gebremstem Zustand leicht vorgespannt ist, was ein Aufschwingen der Bremse verhindert (Fig. 12).

Ferner besteht bei extremen Lastbedingungen die Gefahr, dass der Tilger mit relativ großer Geschwindigkeit gegen den Anschlagpuffer (610) am Ende der Laufschiene (507) fährt.

Da sich die rotierende Schwungmasse (701) in diesem Fall weiter drehen will, würden große Lasten auf die Antriebsrolle (713) wirken. Um dies zu verhindern, ist eine Überlast-Rutschkupplung (700) vorgesehen. Bei dieser werden Kupplungsbelag-Scheiben von einer Druckfeder (709) mit einer Druckfeder-Vorspannscheibe (710) zusammengepresst. Die Druckfeder (709) ist so stark vorgespannt, dass die Reibung der Kupplungsbelag-Scheiben das für den Normalbetrieb erforderliche Drehmoment übertragen. Treten höhere Lasten auf so geschieht eine Relativbewegung zwischen der Antriebsrolle mit Verzahnung (713) und der Antriebswelle (701) für Rotation-Schwungmasse (701), so dass keine unerträglichen Lasten zwischen der Antriebsrolle und der Verzahnung mehr wirksam werden können (Fig. 13).

## Patentansprüche

1. Schwingungstilger zur Dämpfung von Schwingungen in Windkraftanlagen, welcher mindestens eine Pendelvorrichtung aufweist, umfassend eine Tilgermasse (1), welche
(i) an einer Aufhängekonstruktion (2) frei schwingbar befestigt ist, oder
(ii) mit einer zumindest in ihrem mittleren Bereich im Wesentlichen konkav oder kreisförmig gekrümmten Laufvorrichtung (507) verbunden ist, auf welcher die Tilgermasse zusammen mit einem angetriebenen rotierenden, rotationssymmetrischen Rotationsmassenbauteil (510) mittels eines rollen- oder räderbetriebenen Fahrwerks (508) hin und her bewegbar ist,
**dadurch gekennzeichnet, dass** der Schwingungstilger eine elektromagnetische Bremseinrichtung (100, 200) aufweist, welche eine Blattfeder-Vorrichtung (105, 106, 205, 206, 209, 306, 307, 308, 309, 505, 506, 602) umfasst, an deren einem Ende ein Elektromagnet (101, 201, 301,401, 501, 601) so angebracht ist, dass bei Stromfluss im Elektromagneten, der Elektromagnet an die Tilgermasse (1) oder an das mit der Tilgermasse (1) in Verbindung stehende Rotationsmassenbauteil (510) bis zur Berührung herangezogen wird, so dass die Bewegung der Tilgermasse oder des Rotationsmassenbauteils dadurch abgebremst oder gestoppt wird, und der Elektromagnet im stromlosen Zustand durch die federnde Halterung oder allein durch sei Gewicht unter Freigabe der Tilgermasse oder des Rotationsmassenbauteils in seine Ausgangslage zurückkehrt, wobei die elektromagnetische Bremseinrichtung durch ein gesteuertes Strommanagement so betrieben wird, dass sie das Anhalten oder Abbremsen und wieder Anlaufen der Tilgermasse (1, 510), oder eine variable frequenzabhängige Dämpfung der Bewegung der Tilgermassen und somit der unerwünschten Schwingungen bewirkt.

2. Schwingungstilger nach Anspruch 1, **dadurch gekennzeichnet, dass** die Blattfeder (105, 205, 602) ein Versteifungselement (603) aufweist, und zwischen Blattfeder und Versteifungselement ein dämpfendes Gummielement (604) platziert ist.

3. Schwingungstilger nach Anspruch 1 oder 2, **dadurch gekennzeichnet, dass** die Tilgermasse (1) oder das Rotationsmassenbauteil (510) unterhalb oder oberhalb oder auf ihrer oberen und / oder unteren Seitenfläche an dafür vorbestimmten Stellen mindestens eine Kontaktfläche (3) oder einen Kontaktflansch (606) für den Elektromagneten aufweist, welche(r) so ausgebildet und angeordnet ist, dass die Pendelkonstruktion mit der Tilgermasse ungehindert schwingen bzw. sich bewegen kann.

4. Schwingungstilger nach einem der Ansprüche 1 - 3, **dadurch gekennzeichnet, dass** der Elektromagnet einen Bremsbelag in Form einer Bremsplatte, eine Bremsschicht oder eine Bremsringstruktur (102, 202, 302) aufweist, der ganz oder teilweise die zur Masse (1, 510) ausgerichteten Fläche des Elektromagneten bedeckt und verhindern soll, dass es im Bremszustand zu einem direkten Kontakt des Elektromagneten mit der Metallfläche der Masse (1, 510) kommt.

5. Schwingungstilgervorrichtung nach Anspruch 4, **dadurch gekennzeichnet, dass** sie eine Justiervorrichtung (103, 203, 303) zur Einstellung der Dicke und der Nachjustierung des Abstandes des besagten Bremsbelages von der Masse (1, 510).

6. Schwingungstilger nach einem der Ansprüche 1 - 5 , **dadurch gekennzeichnet, dass** die Pendelvorrichtung mit einer zumindest in ihrem mittleren Bereich im Wesentlichen konkav oder kreisförmig gekrümmten Laufvorrichtung (507) verbunden ist, auf welcher die Tilgermasse (1) zusammen mit dem rotierenden Rotationsmassenbauteil (510) mittels eines rollen- oder räderbetriebenen Fahrwerks (508) hin und her bewegbar ist, wobei das Rotationsmassenbauteil eine Rotationsachse senkrecht zur Ebene der Kreisbahn der Laufvorrichtung aufweist, und die Rotationsrichtung des Rotationsmassenbauteils im Wesentlichen der jeweiligen Richtung des bewegten Fahrwerks (508) entlang der Laufvorrichtung (507) entspricht.

7. Schwingungstilger nach Anspruch 6, **dadurch gekennzeichnet, dass** das Rotationsmassenbauteil (510) im Wesentlichen aus einem angetriebenen Schwungrad (611, 711) mit Antriebsachse oder Welle und einer oder mehreren Massenscheiben (512, 701) oder Scheibensegmenten hiervon besteht, welche auf die Achse oder Welle des Schwungrades aufgeschoben oder an dieser befestigt werden können und mit dem Schwungrad rotieren.

8. Schwingungstilger nach Anspruch 6 oder 7, **dadurch gekennzeichnet, dass** das Rotationsmassenbauteil (510) eine einstellbare variable rotierende Masse (512, 701) aufweist, die in Abhängigkeit vom Durchmesser 1% - 30% der Tilgemasse (1) entspricht.

9. Schwingungstilger nach einem der Ansprüche 6 - 8, **dadurch gekennzeichnet, dass** die Laufvorrichtung (507) eine oder zwei parallel geführte Laufschienen aufweist, und das Fahrwerk (508) bzw. die Tilgermasse (1) auf mindestens zwei Laufrädern oder Laufrollen bzw. Antriebsrädern oder Laufrollen auf der Laufvorrichtung hin und her bewegt werden kann.

10. Schwingungstilger nach Anspruch 9, **dadurch gekennzeichnet, dass** mindestens eine Laufschiene und / oder mindestens ein Laufrad der Laufvorrichtung (507) eine die Reibkräfte steigernde Beschichtung, Auflage oder Oberflächenstruktur für die Laufflächen aufweist.

11. Schwingungstilger nach einem der Ansprüche 1 - 10, **dadurch gekennzeichnet, dass** er eine zusätzliche Vorrichtung zur Dämpfung von Schwingungen aufweist.

12. Schwingungstilger nach Anspruch 11, **dadurch gekennzeichnet, dass** die zusätzliche Vorrichtung ein Wirbelstromdämpfer ist, der im Rotationsmassenbauteil (510) untergebracht und wirksam ist.

13. Schwingungstilger nach Anspruch 12, **dadurch gekennzeichnet, dass** der Wirbelstromdämpfer eine aus Permanentmagneten bestehenden Magnetanordnung (703) und eine elektrisch leitende, nicht magnetisierbare Metallscheibe (702) umfasst.

14. Schwingungstilger nach Anspruch 13, **dadurch gekennzeichnet, dass**
(a) die Magnetanordnung (703) im Umfang des Schwungrades (711, 611) angeordnet ist und die metallische Leiterscheibe (702) zwischen Magnetanordnung und Schwungmasse (512, 701) fest angebracht ist, oder
(b) das Schwungrad (711, 611) mit der mitrotierenden metallischen Leiterscheibe (702) versehen ist oder selbst die Leiterscheibe ist, und die gegenüberliegende Magnetanordnung (703) auf einer nicht-mitrotierenden Platte angeordnet ist, welche sich zwischen Schwungrad (711, 611) und Schwungmasse (512, 701) befindet.

15. Windkraftanlage umfassend einen Turm, eine Gondel und einen Rotor, **dadurch gekennzeichnet, dass** sie einen Schwingungstilger gemäß einem der Ansprüche 1 - 14 aufweist, welcher im Turm oder in der Gondel oder außen an der Gondel angebracht ist.

## Claims

1. Vibration absorber for damping vibrations in wind turbines, which has at least one pendulum device, and comprises an absorber mass (1) which
(i) is fastened to a suspension structure (2) such that it can swing freely, or
(ii) is connected to a running device (507) which is curved substantially concavely or circularly at least in its central region, and on which the absorber mass is movable back and forth together with a driven rotating, rotationally symmetrical rotational mass component (510) by means of a roller-operated or wheel-operated running gear (508),
**characterized in that** the vibration absorber has an electromagnetic braking apparatus (100, 200) which comprises a leaf spring device (105, 106, 205, 206, 209, 306, 307, 308, 309, 505, 506, 602), at one end of which an electromagnet (101, 201, 301, 401, 501, 601) is attached such that, when current flows through the electromagnet, said electromagnet is pulled toward the absorber mass (1) or toward the rotational mass component (510) connected to the absorber mass (1) until contact is made so that the movement of the absorber mass or of the rotational mass component is braked or stopped, and the electromagnet, when free of current, returns to its initial position by being held in a spring-loaded manner or solely by means of its weight when the absorber mass or the rotational mass component is released, the electromagnetic braking apparatus being operated by controlled power management in such a way that it causes the stopping or braking, and restarting, of the absorber mass (1, 510) or a variable frequency-dependent damping of the movement of the absorber masses, and thus of the undesired vibrations.

2. Vibration absorber according to claim 1, **characterized in that** the leaf spring (105, 205, 602) has a stiffening element (603), and a damping rubber element (604) is placed between the leaf spring and the stiffening element.

3. Vibration absorber according to either claim 1 or claim 2,
**characterized in that** the absorber mass (1) or the rotational mass component (510) has at least one contact surface (3) or contact flange (606) for the electromagnet below or above or on the upper and/or lower lateral surface thereof at locations predetermined therefor, said contact surface or flange being designed and arranged in such a way that the pendulum structure can swing or move unhindered together with the absorber mass.

4. Vibration absorber according to any of claims 1 to 3,
**characterized in that** the electromagnet has a brake lining in the form of a brake plate, a brake layer or a brake ring structure (102, 202, 302) which completely or partially covers the surface of the electromagnet oriented toward the mass (1, 510) and is intended to prevent the electromagnet from coming into direct contact with the metal surface of the mass (1, 510) in the braking state.

5. Vibration absorber device according to claim 4, **characterized in that** it an adjustment device (103, 203, 303) for adjusting the thickness and the readjustment of the distance of said brake lining from the mass (1, 510).

6. Vibration absorber according to any of claims 1 to 5, **characterized in that** the pendulum device is connected to a running device (507) which is curved substantially concavely or circularly at least in its central region, and on which the absorber mass (1) is movable back and forth together with the rotating rotational mass component (510) by means of a roller-operated or wheel-operated running gear (508), the rotational mass component having an axis of rotation perpendicular to the plane of the circular path of the running device, and the rotational direction of the rotational mass component substantially corresponding to the particular direction of the moving running gear (508) along the running device (507).

7. Vibration absorber according to claim 6, **characterized in that** the rotational mass component (510) consists substantially of a driven flywheel (611, 711) having a drive axle or shaft and one or more mass disks (512, 701) or disk segments thereof that can be pushed or fastened onto the axle or shaft of the flywheel and rotate together with the flywheel.

8. Vibration absorber according to either claim 6 or claim 7,
**characterized in that** the rotational mass component (510) has an adjustable variable rotating mass (512, 701) which corresponds to 1% - 30% of the absorber mass (1) depending on the diameter.

9. Vibration absorber according to any of claims 6 to 8,
**characterized in that** the running device (507) has one or two running rails guided in parallel, and the running gear (508) and the absorber mass (1) can be moved back and forth on the running device on at least two running wheels or running rollers and/or drive wheels or running rollers.

10. Vibration absorber according to claim 9, **characterized in that** at least one running rail and/or at least one running wheel of the running device (507) has a coating, plating or surface structure for the running surfaces that augments the frictional forces.

11. Vibration absorber according to any of claims 1 to 10,
**characterized in that** it has an additional device for damping vibrations.

12. Vibration absorber according to claim 11, **characterized in that** the additional device is an eddy current damper which is accommodated and operative in the rotational mass component (510).

13. Vibration absorber according to claim 12, **characterized in that** the eddy current damper has a magnet arrangement (703) consisting of permanent magnets, and an electrically conductive, non-magnetizable metal disk (702).

14. Vibration absorber according to claim 13, **characterized in that**
(a) the magnet arrangement (703) is arranged on the circumference of the flywheel (711, 611) and the metal conductor disk (702) is securely attached between the magnet arrangement and the flywheel mass (512, 701), or
(b) the flywheel (711, 611) is provided with the co-rotating metal conductor disk (702) or is itself the conductor disk, and the opposing magnet arrangement (703) is arranged on a non-co-rotating plate which is located between the flywheel (711, 611) and the flywheel mass (512, 701).

15. Wind turbine comprising a tower, a nacelle and a rotor,
**characterized in that** it has a vibration absorber according to any of claims 1-14, which is attached in the tower or in the nacelle or on the exterior of the nacelle.

## Revendications

1. Amortisseur d'oscillations pour l'absorption d'oscillations dans des éoliennes, lequel présente au moins un dispositif pendulaire, comprenant une masse d'amortissement (1) qui
(i) est fixée de manière à pouvoir osciller librement sur une structure de suspension (2), ou
(ii) est reliée à un dispositif de roulement (507) incurvé de manière sensiblement concave ou circulaire au moins dans sa zone centrale et sur lequel la masse d'amortissement peut être déplacée d'avant en arrière, conjointement avec un composant de masse de rotation (510) rotatif entraîné et à symétrie de rotation, au moyen d'un mécanisme de déplacement (508) fonctionnant avec galets ou avec roues,
**caractérisé en ce que** l'amortisseur d'oscillations présente un appareil de freinage électromagnétique (100, 200) qui comprend un dispositif à ressort à lames (105, 106, 205, 206, 209, 306, 307, 308, 309, 505, 506, 602) à une extrémité duquel un électroaimant (101, 201, 301,401, 501, 601) est monté de sorte que, en cas de flux de courant dans l'électroaimant, l'électroaimant est tiré vers la masse d'amortissement (1) ou vers le composant de masse de rotation (510) en liaison avec la masse d'amortissement (1) jusqu'à entrer en contact avec, de sorte que le mouvement de la masse d'amortissement ou du composant de masse de rotation est ainsi freiné ou arrêté, et l'électroaimant revient à sa position initiale en l'absence de courant à l'aide du maintien élastique ou seul à l'aide de son poids avec libération de la masse d'amortissement ou du composant de masse de rotation, dans lequel l'appareil de freinage électromagnétique est actionné par une gestion de courant commandée de sorte qu'il provoque l'arrêt ou le freinage et le redémarrage de la masse d'amortissement (1, 510), ou une absorption variable dépendant de la fréquence du mouvement des masses d'amortissement et donc des oscillations indésirables.

2. Amortisseur d'oscillations selon la revendication 1, **caractérisé en ce que** le ressort à lames (105, 205, 602) présente un élément raidisseur (603) et un élément en caoutchouc absorbant (604) est placé entre le ressort à lames et l'élément raidisseur.

3. Amortisseur d'oscillations selon la revendication 1 ou 2,
**caractérisé en ce que** la masse d'amortissement (1) ou le composant de masse de rotation (510) présente, en dessous ou au-dessus ou sur sa surface latérale supérieure et/ou inférieure en des emplacements prédéterminés, au moins une surface de contact (3) ou une bride de contact (606) pour l'électroaimant, laquelle est conçue et disposée de sorte que la structure pendulaire peut osciller ou se déplacer sans entraves avec la masse d'amortissement.

4. Amortisseur d'oscillations selon l'une des revendications 1 à 3,
**caractérisé en ce que** l'électroaimant présente une garniture de frein sous forme d'une plaque de frein, d'une couche de frein ou d'une structure d'anneau de frein (102, 202, 302) qui recouvre entièrement ou partiellement la surface de l'électroaimant orientée vers la masse (1, 510) et doit empêcher un contact direct de l'électroaimant avec la surface métallique de la masse (1, 510) à l'état de freinage.

5. Dispositif amortisseur d'oscillations selon la revendication 4,
**caractérisé en ce qu**'il un dispositif d'ajustement (103, 203, 303) permettant de régler l'épaisseur et le réajustement de la distance de ladite garniture de frein par rapport à la masse (1, 510).

6. Amortisseur d'oscillations selon l'une des revendications 1 à 5,
**caractérisé en ce que** le dispositif pendulaire est relié à un dispositif de roulement (507) incurvé de manière sensiblement concave ou circulaire au moins dans sa zone centrale et sur lequel la masse d'amortissement (1) peut être déplacée d'avant en arrière, conjointement avec le composant de masse de rotation (510) rotatif, au moyen d'un mécanisme de déplacement (508) fonctionnant avec galets ou avec roues, dans lequel le composant de masse de rotation présente un axe de rotation perpendiculaire au plan de la trajectoire du dispositif de roulement, et le sens de rotation du composant de masse de rotation correspond sensiblement au sens respectif du mécanisme de déplacement (508) en mouvement le long du dispositif de roulement (507).

7. Amortisseur d'oscillations selon la revendication 6, **caractérisé en ce que** le composant de masse de rotation (510) est sensiblement constitué d'un volant d'inertie (611, 711) entraîné comportant un axe d'entraînement ou un arbre et d'un ou de plusieurs disques de masse (512, 701) ou segments de disque de ceux-ci, lesquels peuvent être poussés sur l'axe ou l'arbre du volant d'inertie ou fixés à celui-ci et tournent avec le volant d'inertie.

8. Amortisseur d'oscillations selon la revendication 6 ou 7,
**caractérisé en ce que** le composant de masse de rotation (510) présente une masse (512, 701) rotative variable réglable qui correspond à 1 % à 30 % de la masse d'amortissement (1) en fonction du diamètre.

9. Amortisseur d'oscillations selon l'une des revendications 6 à 8,
**caractérisé en ce que** le dispositif de roulement (507) présente un ou deux rails de roulement guidés en parallèle, et le mécanisme de déplacement (508) ou la masse d'amortissement (1) peut être déplacé d'avant en arrière sur le dispositif de roulement sur au moins deux roues de roulement ou galets de roulement ou des roues d'entraînement ou galets de roulement.

10. Amortisseur d'oscillations selon la revendication 9, **caractérisé en ce** q**u**'au moins un rail de roulement et/ou au moins une roue de roulement du dispositif de roulement (507) présentent un revêtement, un support ou une structure de surface augmentant les forces de frottement pour les surfaces de roulement.

11. Amortisseur d'oscillations selon l'une des revendications 1 à 10, **caractérisé en ce qu**'il présente un dispositif supplémentaire pour l'absorption d'oscillations.

12. Amortisseur d'oscillations selon la revendication 11, **caractérisé en ce que** le dispositif supplémentaire est un absorbeur de courants de Foucault qui est logé et agit dans le composant de masse de rotation (510).

13. Amortisseur d'oscillations selon la revendication 12, **caractérisé en ce que** l'absorbeur de courants de Foucault comprend un agencement d'aimants (703) constitué d'aimants permanents et un disque métallique (702) non magnétisable électriquement conducteur.

14. Amortisseur d'oscillations selon la revendication 13, **caractérisé en ce que**
(a) l'agencement d'aimants (703) est disposé sur la circonférence du volant d'inertie (711, 611) et le disque conducteur métallique (702) est monté de manière fixe entre l'agencement d'aimants et la masse d'inertie (512, 701), ou
(b) le volant d'inertie (711, 611) est pourvu du disque conducteur métallique (702) co-rotatif ou est lui-même le disque conducteur, et l'agencement d'aimants (703) opposé est disposé sur une plaque non corotative qui se trouve entre le volant d'inertie (711, 611) et la masse d'inertie (512, 701).

15. Éolienne comprenant une tour, une nacelle et un rotor,
**caractérisée en ce qu'**elle présente un amortisseur d'oscillations selon l'une des revendications 1 à 14 monté dans la tour ou dans la nacelle ou à l'extérieur de la nacelle.
